# EUROPEAN PATENT SPECIFICATION

(11) **EP 2 738 882 B1**
(45) Date of publication and mention of the grant of the patent: **06.11.2019**
(21) Application number: 13004556.0
(22) Date of filing: 18.09.2013
(51) Int. Cl.: H01R 9/22, H01R 43/18, H02B 1/48

(54) **Distribution unit for an electrical installation**
Verteilereinrichtung für eine Elektroinstallation
Unité de distribution pour installation électrique

(30) Priority: 30.11.2012 EP 12008060; 25.07.2013 EP 13003723
(43) Date of publication of application: 04.06.2014
(73) Proprietor: ABB AG, 68309 Mannheim (DE)
(72) Inventor: van den Bosch, Jules, 5216 GX s'Hertogenbosch (NL); Witte, Adriaan Marinus, 3436 HT Nieuwegein (NL)

(56) References cited:
- EP-B1- 1 615 308
- CH-A- 554 084
- US-A- 3 801 875

## Description

The invention is about a distribution unit for an electrical installation, comprising a base portion provided with first receiving means for receiving first items of equipment, provided with second receiving means for receiving second items of equipment, said base portion having a lower surface and an opposite upper surface, said base portion having two opposite side walls and a top wall and opposite bottom wall, said side walls, top- and bottom wall extending perpendicularly to and in projecting relationship from said upper surface.

EP 1 615 308 B1 shows a distribution unit for an electrical installation, comprising at least one top hat rail or mounting plate serving for the mounting of at least one device, in particular a protective switch, two supports for the top hat rail or mounting plate being disposed, at a spacing from one another, on a substructure, the top hat rail or mounting plate being secured to the supports, at a spacing from the substructure of the distribution unit, in such a manner that conductors can be laid in the intervening space between the substructure and the top hat rail or mounting plate, the supports, on the one hand, and, on the other hand, coupling parts that project, on the rear side, from the top hat rail or mounting plate, having mutual adaptations, and a releasable retaining element being provided, which holds together the supports and the coupling parts and ensures a shared firm fit of the supports and the coupling parts wherein one of the above-mentioned mutually-adapted parts has, as the above-mentioned retaining element, a latch that can be released, at the rear of the top hat rail or mounting plate, by one finger, and biases into a retaining position, and the other part has an opposing portion which, on insertion, presses back the latch and has a recess for engaging the latch.

CH 554 084 A shows a distribution box for installation onto or into a wall, with a housing made of steel plates and with one kind of mounting rails for mounting installation devices, wherein parts of the housing walls are formed as these mounting rails.

It is the object of the present invention to provide a distribution unit for an electrical installation which has less production parts and allows for an easier assembly.

According to the invention, the above object is achieved by a distribution unit with the features as pointed out in claim 1. According to the invention, the base portion with its first and second receiving means and its side walls and top- and bottom walls is integrally formed as one part. The distribution unit according to the invention is realized as one single piece of plastic. This results in a distribution unit which has a highly reduced number of parts to be assembled. Most parts that are needed to fix the switching devices and the terminals are integrated into one single part. No additional fixing parts and no separate assembly steps for the first and second receiving means are necessary any more. According to an advantageous aspect of the invention, the base portion with its first and second receiving means and its side walls and top- and bottom walls is integrally formed by plastic injection molding. This is a quite commonly used technology and results in a distribution unit that can be manufactured in high volumes at low production cost.

According to the invention, the first receiving means is a top hat rail. A top hat rail, like for example a DIN-rail, is a standardized receiving means applied in most known distribution units.

According to an advantageous aspect of the invention, the top hat rail is at its both ends integrally formed with the side walls. So the top hat rail gets an additional function in holding together the side walls and so giving additional mechanical strength and stiffness to the distribution unit. The side walls are joined together by the integrated top hat rail. According to an advantageous aspect of the invention, the top hat rail is integrally formed to the side walls in a distance from the upper surface leaving a free space between the upper surface and the top hat rail. In such an advantageous embodiment it is even possible to install cables in the space between the top hat rail and the upper surface of the base portion, without the need of extra mounting means to mount the top hat rail in a distance from the upper surface of the base portion.

According to an advantageous aspect of the invention, the first items of equipment are installation switching devices. Such switching devices are for example miniature circuit breakers, residual current circuit breakers, relays, surge current interrupters or the like, all kinds of switching devices that usually are installed in an electrical distribution unit for electrical circuitry in a house, building, apartment or industrial premises.

A distribution unit according to the invention can according to advantageous embodiments have one top hat rail or two or more top hat rails. There are advantageous embodiments which are a rather narrow distribution unit, with a width and length of the top hat rail or top hat rails adapted to mount for example as few as four installation switching devices. There are also advantageous embodiments which are broader distribution units, with a wider width and larger length of the top hat rail or top hat rails adapted to receive for example 8 or 12 or even more installation switching devices on one top hat rail.

According to the invention, the second receiving means is a mounting strip for mounting a terminal block, said mounting strip having an inward bound surface and an outward bound surface. Due to this advantageous embodiment, no additional fixing parts and no separate assembly steps for a mounting strip to hold the terminals are necessary any more.

According to the invention, the mounting strip is integrally formed with the top wall or the bottom wall or both. The advantage of such an embodiment is that the top wall or the bottom wall or both are formed as mounting strip for the terminal blocks. There is only one single wall element, top wall or bottom wall, which integrates two functions, to be a wall and to be a receiving means for receiving and mounting the terminal blocks.

According to an advantageous aspect of the invention, the mounting strip has projecting bars for receiving respective mounting slots on the mounting side of the terminal blocks, said projecting bars being oriented transversely with respect to the longitudinal direction of the mounting strip, arranged in parallel to one another and extending perpendicularly to and in projecting relationship from the inward bound surface of the mounting strip. According to an advantageous aspect of the invention, the distribution unit comprises a terminal block arrangement, made up of the mounting strip and of modules that can be fitted to the mounting strip next to one another in a row, said modules having an insulated housing, whereby each housing and the mounting strip have mutual connection devices for the purpose of plugging the modules to the mounting strip, transversely with respect to the longitudinal direction of the mounting strip, whereby each housing has a mounting wall and at least one receiving slot in the mounting side, and whereby the mounting strip has a number of connection bars projecting from its inward bound surface and oriented transversely with respect to the longitudinal direction of the mounting strip, whereby the receiving slot and the connection bars are forming the mutual connection devices, whereby the connection bar has a T-shaped cross-section, with a first plate-like limb arising from one of the two rectangular broad long-edged front plates, and with a second plate-like limb formed at the free end of and perpendicular to the first limb.

The invention will be described in greater detail by description of an embodiment with reference to the accompanying drawings, wherein
- Fig. 1: shows an embodiment of a distribution unit according to the invention,
- Fig. 2: shows a module oriented towards a mounting strip in a distribution unit with a terminal block arrangement according to the invention,
- Fig. 3a: shows a module oriented towards a mounting strip in a distribution unit with a terminal block arrangement according to a second embodiment of the invention,
- Fig. 3b: shows a schematic drawing of a side view and a view perpendicular to the mounting wall of a module according to the embodiment shown in figure 3a,
- Fig. 4: shows a sectional view of the terminal block arrangement according to the embodiment of figure 3a, the module being fixed to the mounting strip,
- Fig. 5: shows a sectional topside view of the terminal block arrangement according to fig. 4,
- Fig. 6: shows an enlarged detail view of the mounting interface between a module fixed to a mounting strip according to the embodiment shown in figure 3a,
- Fig. 7a: shows a schematic cross-sectional view of a housing mounted to a mounting strip in a distribution unit with a terminal block arrangement according to the invention,
- Fig. 7b: shows a schematic cross-sectional view of a housing and a mounting strip in a distribution unit with a terminal block arrangement according to the invention, prior to assembly of both together, with a height-increasing means increasing the height of the second plate-like limb of one of the connection bars,
- Fig. 7c: shows a schematic cross-sectional view of a housing and a mounting strip in a distribution unit with a terminal block arrangement according to the invention, prior to assembly of both together, with three embodiments of distance-reducing means applied to the free edge of at least one of the rod-like lugs bordering the receiving slot,
- Fig. 7d: shows a schematic cross-sectional view of a housing and a mounting strip in a distribution unit with a terminal block arrangement according to the invention, prior to assembly of both together, with two embodiments of frontal expansion means applied to the broad long-edged front plate of the mounting strip or the mounting wall of the housing.

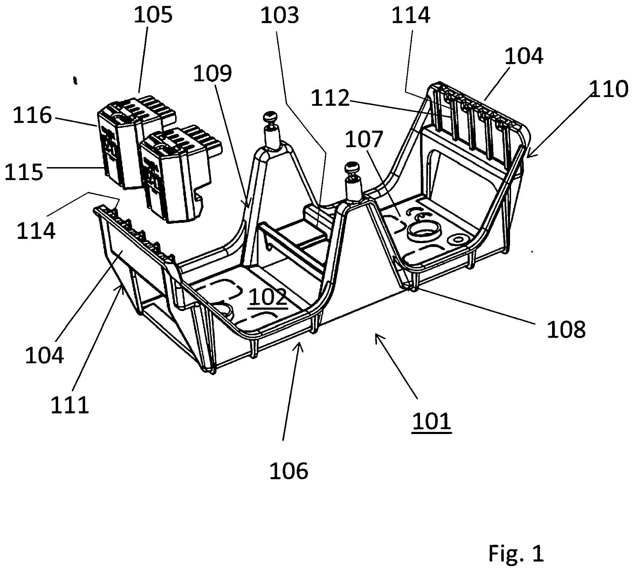

Referring now to figure 1, this shows a distribution unit 101 for an electrical installation. The distribution unit 101 basically has the shape of an open box. It comprises a base portion 102 in the shape of a rectangular plate. The base portion 102 has an upper surface 107 and a lower surface 106. Integrally formed to the base portion 102 are two opposite side walls 108, 109 at the long sides of the base portion 102 and a top wall 110 and an opposite bottom wall 111 at the short sides of the base portion 102.

Each side wall 108, 109 is extending perpendicularly to and in projecting relationship from the upper surface 107 of the base portion 102. Each side wall 108, 109 has a projecting center portion, formed like a trapeze, and narrow, band-like main portions extending on both sides from the center portion towards the opposite short ends of the base portion 102.

Each top wall 110 and opposite bottom wall 111 is extending perpendicularly to and in projecting relationship from the upper surface 107 of the base portion 102. It could, however, as well extend in a certain angle different to 90° to the upper surface 107 of the base portion 102. Each top wall 110 and opposite bottom wall 111 have an upper portion formed as a mounting strip 104, also here named as second receiving means, for mounting terminal blocks 105, also here named as second items of equipment, and have a lower portion formed as a kind of rectangular opening between two piles supporting the mounting strip 104. The piles supporting the mounting strip 104 are formed like a ramp rising towards the short end of the base portion 102, increasing mechanical stability and especially twisting resistance of the top wall 110 and opposite bottom wall 111.

The center portions of the two opposite side walls 108, 109 are joined together by a top hat rail 103, also here named as first receiving means. The top hat rail is a first receiving means 103 for receiving first items of equipment, particularly electrical installation switching devices such as miniature circuit breakers, residual current breakers, relays, contactors, overvoltage protection devices and the like.

The second receiving means 104 is a mounting strip for mounting a terminal block. Said mounting strip has an inward bound surface 112 and an outward bound surface 113.

The mounting strip is integrally formed with the top wall 110 or the bottom wall 111 or both. The mounting strip has projecting bars 114 for receiving respective mounting slots 115 on the mounting side 116 of the terminal blocks 105. Said projecting bars 114 are oriented transversely with respect to the longitudinal direction of the mounting strip 104, arranged in parallel to one another and extending perpendicularly to and in projecting relationship from the inward bound surface 112 of the mounting strip 104.

The terminal blocks 105 can in particular be terminal blocks for connecting protective earth conductors and neutral conductors (PE/N terminal).

The top hat rail 103 is integrally formed to the side walls 108, 109 in a distance from the upper surface 107 leaving a free space between the upper surface 107 and the top hat rail 103. This space can be used to lead through cables or wires. The cables or wires can be introduced into the distribution unit though the kind of rectangular opening in the top wall 110 and opposite bottom wall 111 between two piles supporting the mounting strip 104. The cables or wires are not shown in the drawing, but it is easily understood how such an installation will be completed.

The distribution unit 101 as shown in figure 1 may be covered by a cover or a hood, not shown here in the drawing and generally known how to design and apply for the person skilled in the art.

The distribution unit 101 is realized as one single piece of plastic. The base portion 102 with its side walls 108, 109, the top- and bottom walls 110, 111, the top hat rail 103 and the mounting strips 104 is integrally formed as one part. The base portion 102 with its first and second receiving means 103, 104 and its side walls 108, 109 and top- and bottom walls 110, 111 is for example integrally formed by plastic injection molding. This is a well established technology for producing a large number of plastic devices at low cost. The integrally formed top hat rail 103 adds to the mechanical stability and twisting resistance of the distribution unit 101. No additional parts and no further assembly steps for mounting the top hat rail 103 or the mounting strips 104 are needed. The distribution box 101 with all needed accessory parts for mounting the switching devices and the terminal blocks is achieved by one injection molding process step.

The distribution box 101 shown in figure 1 has one short top hat rail 103, and accordingly a small width, and is designed to receive a small number of electrical switching devices, for example four of these installation switching devices. It is understood, however, that a distribution unit according to the invention can have one top hat rail or two or more top hat rails. A distribution unit according to the invention can be made even broader, with a wider width and larger length of the top hat rail or top hat rails adapted to receive a higher number of installation switching devices, for example 8 or 12 or even more installation switching devices on one top hat rail. If a broader distribution box is made with two or more top hat rails, an even higher number of installation switching devices can be mounted inside.

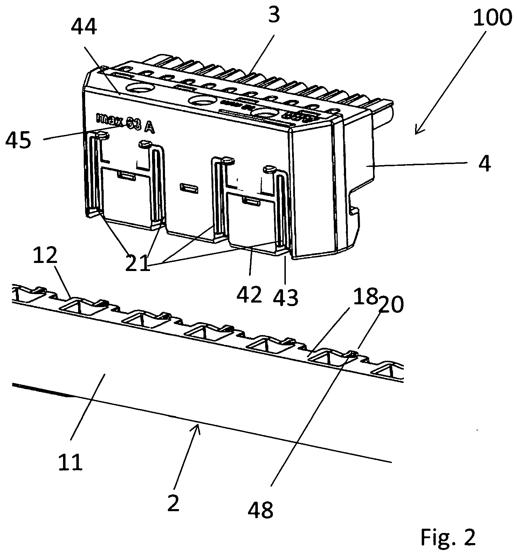

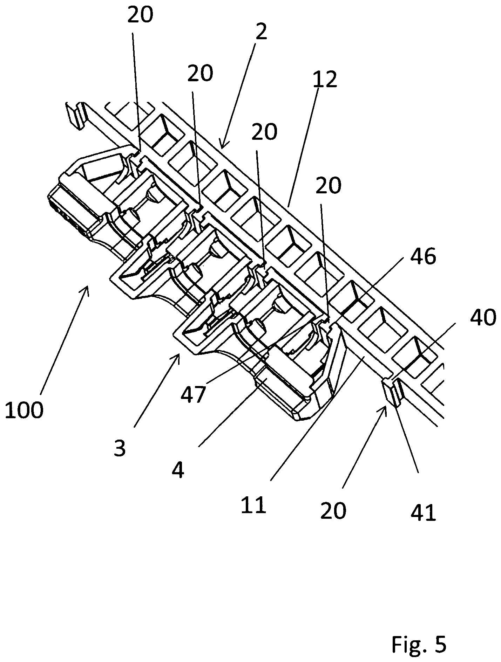

Referring now to figures 2 to 7, there is shown some details of the terminal blocks and the mounting strip and the fixing of the terminal blocks to the mounting strip. The subsystem consisting of the terminal block and the mounting strip is in the figures 2 to 7 referred to as terminal block arrangement 100.

The distribution unit 101 according to the invention comprises a terminal block arrangement 100, see figures 2 - 7, made up of the mounting strip 104, 2 and of modules 105 that can be fitted to the mounting strip 104, 2 next to one another in a row, said modules 105 having an insulated housing 4, whereby each housing 4 and the mounting strip 104, 2 have mutual connection devices 21, 20 for the purpose of plugging the modules 3 to the mounting strip 104, 2, transversely with respect to the longitudinal direction of the mounting strip 104, 2, whereby each housing 4 has a mounting wall 45, 116 and at least one receiving slot 21, 115 in the mounting side 45, 116 , and whereby the mounting strip 104, 2 has a number of connection bars 20, 114 projecting from its inward bound surface 112 and oriented transversely with respect to the longitudinal direction of the mounting strip 104, 2, whereby the receiving slot 21, 115 and the connection bars 20, 114 are forming the mutual connection devices, whereby the connection bar 20, 114 has a T-shaped cross-section, with a first plate-like limb 40 arising from one of the two rectangular broad long-edged front plates 11, and with a second plate-like limb 41 formed at the free end of and perpendicular to the first limb 40.

The terminal block arrangement 100 usually has a conductor rail and a number of connection elements for the purpose of connecting conductors to the conductor rail. Each of the modules 3 has at least one of the connection elements. The modules 3 have an insulating housing 4 and a conductor rail section (not shown here in the figures) which is arranged within the housing 4. The conductor rail sections are forming the conductor rail, and the terminal block arrangement has links for the purpose of electrically connecting the conductor rail sections of modules which are fitted next to one another on the mounting strip.

The mounting strip 2 is formed as an elongated cube-shaped rod. The rod has two rectangular broad long-edged plates 11, 12. The long edges of the broad long-edged plates 11, 12 and the narrow edges define two opposite narrow long-edged side sections 18.

Each of the housings 4 and the mounting strip 2 have devices for the purpose of plugging the modules 3 to the mounting strip 2, transversely with respect to the longitudinal direction of the mounting strip 2. Said devices on the side of the mounting strip 2 are formed as projecting bars 20, oriented transversely with respect to the longitudinal direction of the mounting strip 2, arranged in parallel to each other, formed to the outside of one of its rectangular broad long-edged plates 11, 12. Said devices on the side of the insulating housing are formed as at least one slot 21 oriented transversely with respect to the longitudinal direction of the mounting strip 2 and adapted for positive locking of the bar 2 into the slot 21 when plugging the module housing 4 to the mounting strip 2.

Each housing 4 has a mounting wall 45 and at least one receiving slot 21 in the mounting side 45. The mounting wall 45 has an insertion edge 42 and the receiving slot 21 has an insertion opening 43 at the insertion edge 42, extending from the insertion edge 42 upwards towards a second edge 44 of the housing 4 located opposite the insertion edge 42. The receiving slot 21 extends about half the way up from the insertion edge 42 to the second edge. The insertion opening 43 is a little wider than the receiving slot 21, facilitating the pushing of the module housing 4 to the connection bars.

Inside the housing 4 and attached to the housing 4 there are all the parts that a housing for a modular terminal clamp requires, such as cable insertion means and channels, clamping spring with clamping spring holding means, terminal screw clamps with screw accession opening in the housing 4 and so on. All these components are not described in detail here, although they can be seen in the figures and the person skilled in the art will recognise them in the figures.

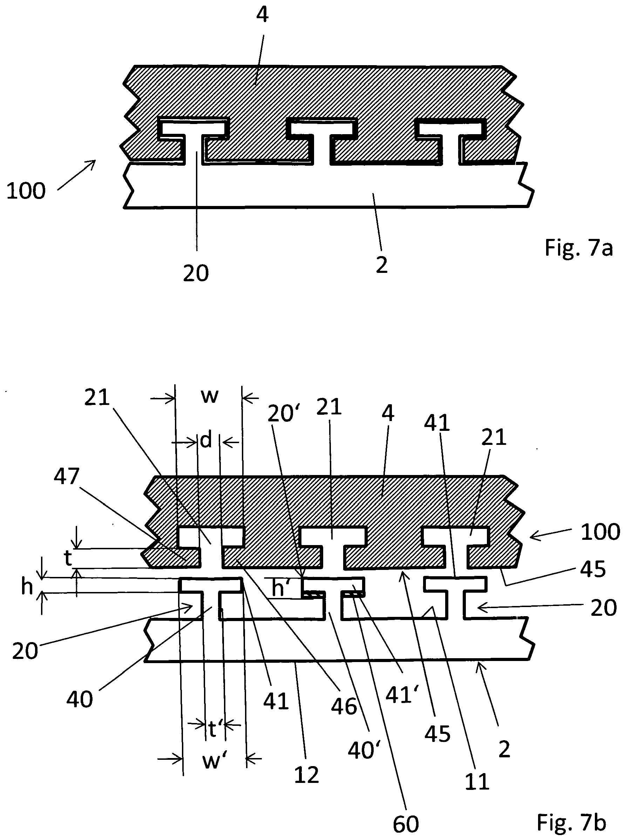

The mounting strip 2 has a number of connection bars 20 projecting from one of its two rectangular broad long-edged front plates 11 and oriented transversely with respect to the longitudinal direction of the mounting strip 2. So the receiving slot 21 and the connection bars 20 are forming the mutual connection devices. The connection bar 20 has a T-shaped cross-section, with a first plate-like limb 40, see figure 7b, arising from the broad long-edged front plate 11, and with a second plate-like limb 41, see figure 7b, formed at the free end of and perpendicular to the first limb 40.

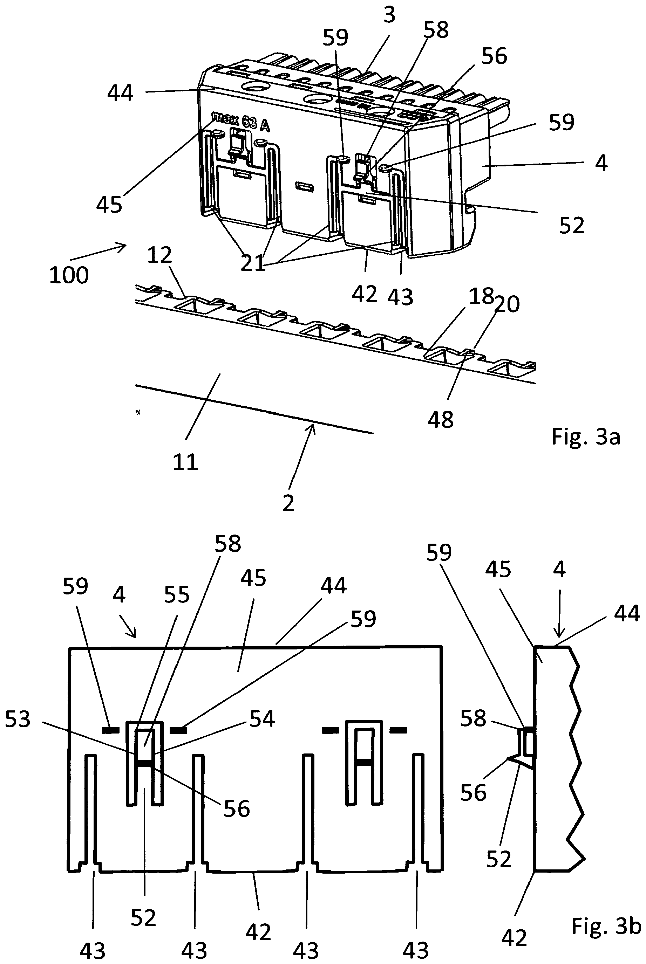

The connection bars 20 are all oriented in parallel and transversely with respect to the longitudinal direction of the mounting strip 2. They are arranged by being spaced apart in equal distances, forming a kind of raster. In figure 2 and 3a one sees a detail with 6 resp. 7 of these connection bars 20. The housing of the module 3 has four receiving slots 21, all of said receiving slots 21 being arranged in a mutually spaced manner, spaced apart in the same equal distances as the connection bars 20. So the raster of the receiving slots 21 in the housing 4 of module 3 fits to the raster of the connection bars 20 at the mounting strip 2. This design allows for an exact positioning of the housings 4 of module 3, in a rastered, grid-like spacing along the longitudinal extension of the mounting strip 2.

The connection bar 20 and the receiving slot 21 are adapted for a gliding cooperation when the connection bar 20 is inserted into the receiving slot 21 at the insertion opening 43.

In the schemes of figures 7a, to 7d it can be seen that the width w of the receiving slot 21 is adapted to the width w' of the second plate-like limb 41, which means that the second plate-like limb 41 is guided within the receiving slot 21, it can easily glide within the receiving slot 21. There are two rod-like lugs 46, 47 projecting from the mounting wall 45 into the receiving slot 21. The thickness t of the lugs 46, 47 are corresponding to the distance of the second plate-like limb 41 from the broad long-edged front plate 11, leaving between their opposed free edges a free distance d corresponding to the thickness t' of the first limb 40. In other words, the interior of the receiving slot 21 forms a kind of negative T-shape, which matches the T-shape of the connection bar 20 in the sense of an adaption for a gliding coupling when the connection bars 20 are inserted into the receiving slots 21.

The two rod-like lugs 46, 47 do not reach completely down to the insertion edge 42, but they end in a short distance above the insertion edge 42. Thus in the remaining section of the receiving slot 21 down to the insertion edge 42 the effective cross-section of the receiving slot 21 appears to be larger than in the rest of the slot 21, when looking at it perpendicularly to the mounting wall of the housing, see figure 3b. The portion with the larger effective cross section thus forms the insertion opening 43 mentioned above.

The connection bar 20 has an insertion end 48 and a distal end opposite the insertion end 48, see figures 2 and 3a. The reference sign 48 is shown only once in the figures, but it is understood that the other connection bars can easily be identified in the figures, as their structure is the same as that marked with a reference sign, and for purposes of clarity of drawing only one out of a number of identical multiple structures was marked with a reference number.

The width of the cross-sectional contour of the connection bar 20 at the insertion end is matched with cross-sectional contour of the receiving slot 21 for easy insertion, but the cross-sectional contour of the connection bar 20 at the distal end is larger than the width of the cross-sectional contour of the receiving slot 21 at the insertion opening 43, so that an insertion of the module 3 at the distal end of the connection bar 20 is prohibited and thus a false insertion of the module 3 is impeded. The described widening of the contour is not shown in the figures, but it can easily be understood.

For increasing the width of the cross-sectional contour of the connection bar 20 at the distal end there a numerous ways. One can increase the dimension of the cross-section of the first plate-like limb 40, or of the second plate-like limb 41, or of both. The increase of the width of the cross-sectional contour needs not be large. In essence, it would be sufficient to increase to a small extent, only to such an extent that the distal end of the connection bar 20 still can be inserted into the insertion opening 43 mentioned above, but does not easily fit into the remaining portion of the receiving slot 21, or can only be pressed into it by applying a substantial force. So the operator would easily recognize the difference between insertion on the correct side of the connection bar, where insertion is smooth and an easy gliding of the receiving slot on the connection bar is felt, and insertion on the wrong side, where insertion is not smoothly possible.

Looking now to figures 7a to 7d, it is explained how the mutual adaptation of at least one of a connection bars 20 and its corresponding receiving slot 21 is designed for a connection with force transmission by friction.

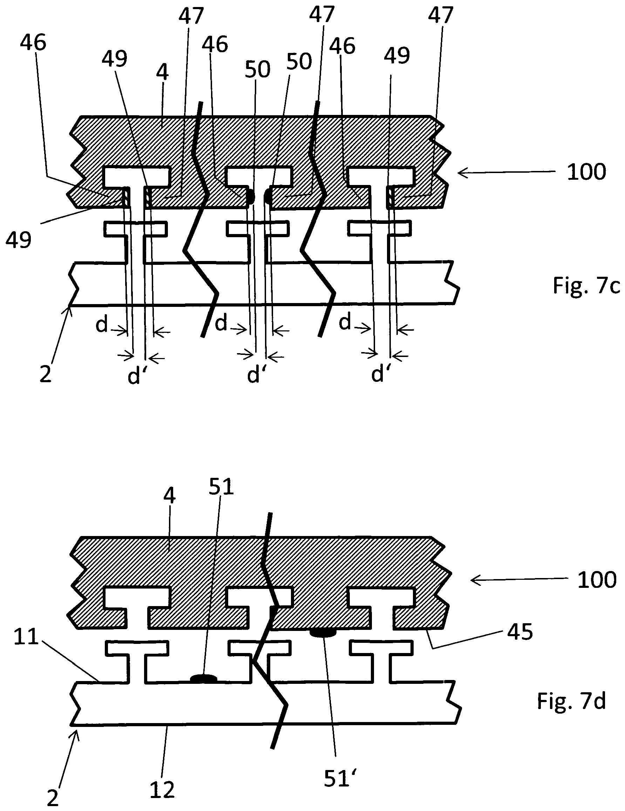

In the three embodiments shown in figure 7c (right, middle, left part of the figure, separated by the zig-zag line to indicate three possible embodiments), there is a distance-reducing means 49, 50 applied to the free edge of at least one of the rod-like lugs 46, 47, so that the distance between the free ends of the lugs is reduced to a smaller distance d' and so the force transmission by friction is achieved by means of at least partially decreasing the distance between the opposed free edges of a pair of rod-like lugs 46, 47 facing each other from d to d'.

On the part shown on the left hand side of figure 7c, the distance-reducing means 49 is a lug 49 formed to both opposed free edges of a pair of two rod-like lugs 46, 47 facing each other. On the part shown on the right-hand side of figure 7c, the distance-reducing means 49 is a lug 49 formed to only one of the free edges of a pair of two rod-like lugs 46, 47 facing each other.

On the part shown in the central part of figure 7c, the distance-reducing means 50 are two bumps 50 formed to both free edges of a pair of two rod-like lugs 46, 47 facing each other.

In the embodiment shown in figure 7b, there is a contour-widening means applied to the cross-sectional contour of the connection bar 20' shown in the central part of figure 7b, so that the force transmission by friction is achieved by at least partially increasing the cross-sectional contour of the connection bar 20'. The contour-widening means is a thickness-increasing means 60, for example an additional thickening, at least partially increasing the thickness h' of the second plate-like limb 41', making it larger than the thickness h of the unchanged second plate-like limb 40 of the other two connection bars 20, so that the force transmission by friction is achieved by at least partially increasing the thickness h' of the second plate-like limb 41'.

In the two embodiments shown in figure 7d (right, and left part of the figure, separated by the zig-zag line to indicate two possible embodiments), there is at least one frontal expansion means 51, 51' applied to at least one of the broad long-edged front plate 11 of the mounting strip 2 or the mounting wall 45 of the housing 4. The force transmission by friction is achieved by a jamming effect when the module 3 is plugged to the mounting strip 2. On the left hand side of figure 7d it is shown that the frontal expansion means is a bump 51 protruding from the broad long-edged front plate 11 of the mounting strip 2. On the right hand side of figure 7d it is shown that the frontal expansion means is a bump 51' protruding from the mounting wall 45 of the housing 4.

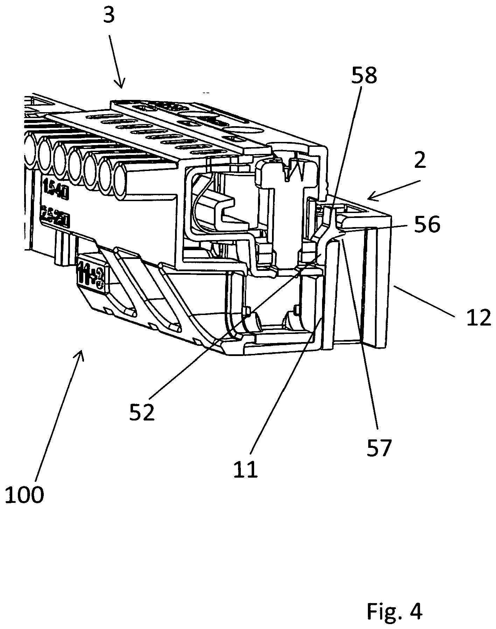

Figures 3a and 3b show an embodiment where there is an alternative or additional means for fixing the housing 4 of module 3 to the mounting strip 2. There is a resilient fixation arm 52, which biases into a retaining position. The resilient fixation arm is formed in the mounting wall 45 of the module housing 4 by slot-like recesses 53, 54, 55. The fixation arm has a latching member 56, here in the form of a latching nose, protruding out of the mounting wall 45. In the broad long-edged front plate 11 of the mounting strip 2 there are recesses 57 formed, one of these is indicated in figure 4. The recesses are rastered with the same raster as the connection bars 20 and the receiving slots 21, whereby each of the recesses 57 is located between two neighbouring connection bars 21, as also each resilient fixation arm 52 is located between two neighbouring insertion slots 21. It is not required to have as many resilient fixation arms as recesses. It may be sufficient for small housings to have as little as one resilient fixation arm. In the embodiment of figure 3a there are only two resilient fixation arms, one to the left, one to the right, none in the centre. Each resilient fixation arm 52 is adapted for a resiliently latching engagement with a corresponding recess 57.

The free end of the resilient fixation arm 52 has a pushing member 58 at its end for pushing the end portion of the resilient fixation arm 52 towards the inside of the housing 4. The latching member 56 can be released by pushing on the pushing member 58 and so pressing the fixation arm 52 towards the inside of the housing 4 for releasing the latching engagement. Positioned near the latching member 56, there is at least one spacer 59 formed at the mounting wall 45 of the housing 4. The effect of the spacer is to limit the displacement of the resilient arm when pressing the mounting wall 45 of the housing 4 against a flat surface.

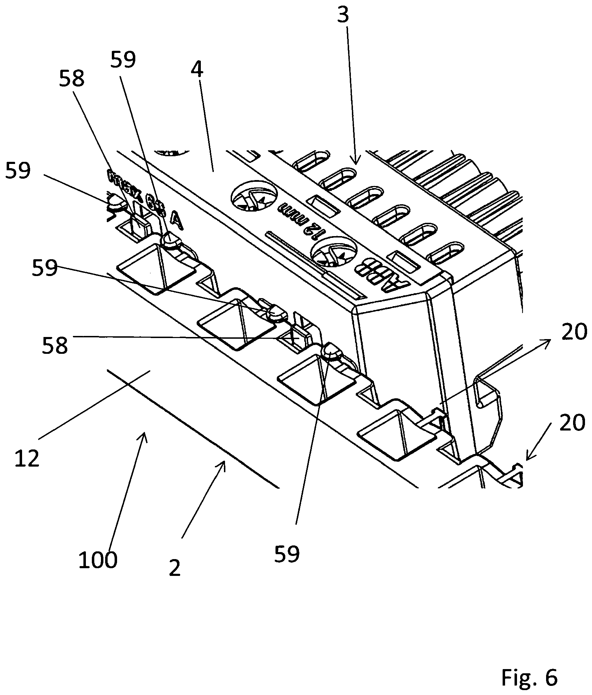

As can be seen in figure 6, the pushing member 58 exceeds the upper surface of the mounting strip 2 when the module is fixed to the mounting strip. So the pushing member 58 is accessible for a manual pushing operation, by finger or by a tool, even when the housing 4 is fixed to the mounting strip. So it is possible to release an individual housing out of a combination of housings arranged in a row and fixed to a mounting strip, even from within the combination.

### List of reference signs

- 2: elongated mounting strip
- 3: module
- 4: housing
- 11: broad long-edged front plate
- 12: broad long-edged front plate
- 18: narrow long-edged side section
- 20: connection bar
- 20': connection bar
- 21: receiving slot
- 40: first plate-like limb
- 41: second plate-like limb
- 42: insertion edge
- 43: insertion opening
- 44: second edge
- 45: mounting wall
- 46: rod-like lug
- 47: rod-like lug
- 48: insertion end
- 49: distance-reducing means for lug 46, 47
- 50: distance-reducing means for lug 46, 47
- 51: frontal expansion means
- 51': frontal expansion means
- 52: resilient fixation arm
- 53: slot-like recess
- 54: slot-like recess
- 55: slot-like recess
- 56: locking member
- 57: recess
- 58: pushing member
- 59: spacer
- 60: thickness-increasing means
- 100: terminal block arrangement
- 101: distribution unit
- 102: base portion
- 103: first receiving means
- 104: second receiving means
- 105: second items of equipment
- 106: lower surface
- 107: upper surface
- 108: side wall
- 109: side wall
- 110: top wall
- 111: bottom wall
- 112: inward bound surface
- 113: outward bound surface
- 114: projecting bar
- 115: mounting slot
- 116: mounting sidew width of slot 21
- w': width of second limb 41
- t: thickness of lugs 46, 47
- t': thickness of first limb 40
- h: thickness of second plate-like limb 41
- h': thickness of second plate-like limb 41'
- d: free distance between free ends of lugs 46, 47
- d': reduced free distance between free ends of lugs 46, 47

## Claims

1. Distribution unit (101) for an electrical installation, comprising a base portion (102) provided with first receiving means (103) for receiving first items of equipment, provided with second receiving means (104) for receiving second items of equipment (105), said base portion having a lower surface (106) and an opposite upper surface (107), said base portion having two opposite side walls (108, 109) and a top wall (110) and opposite bottom wall (111), said side walls (108, 109), top- and bottom wall (110, 111) extending perpendicularly to and in projecting relationship from said upper surface (107),
wherein the base portion (102) with its first and second receiving means (103, 104) and its side walls (108, 109) and top- and bottom walls (110, 111) is integrally formed as one part, wherein the first receiving means (103) is a top hat rail, **characterized in that** the second receiving means (104) is a mounting strip for mounting a terminal block, said mounting strip having an inward bound surface (112) and an outward bound surface (113), and wherein the mounting strip is integrally formed with the top wall (110) or the bottom wall (111) or both.

2. Distribution unit (101) according to claim 1, **characterized in that** the base portion (102) with its first and second receiving means (103, 104) and its side walls (108, 109) and top- and bottom walls (110, 111) is integrally formed by plastic injection molding.

3. Distribution unit (101) according to claim 1, **characterized in that** the top hat rail is at its both ends integrally formed with the side walls (108, 109).

4. Distribution unit (101) according to claim 3 **characterized in that** the top hat rail is integrally formed to the side walls (108, 109) in a distance from the upper surface (107) leaving a free space between the upper surface (107) and the top hat rail.

5. Distribution unit (101) according to claim 1, **characterized in that** the first items of equipment are installation switching devices.

6. Distribution unit (101) according to claim 1, **characterized in that** the mounting strip has projecting bars (114) for receiving respective mounting slots (115) on the mounting side (116) of the terminal blocks (105), said projecting bars (114) being oriented transversely with respect to the longitudinal direction of the mounting strip (104), arranged in parallel to one another and extending perpendicularly to and in projecting relationship from the inward bound surface (112) of the mounting strip (104).

7. Distribution unit (101) according to claim 1, **characterized in that** it comprises a terminal block arrangement (100), made up of the mounting strip (104) and of modules (3) that can be fitted to the mounting strip (104) next to one another in a row, said modules (3) having an insulated housing (4), whereby each housing (3) and the mounting strip (104) have mutual connection devices (21, 20) for the purpose of plugging the modules (3) to the mounting strip (104), transversely with respect to the longitudinal direction of the mounting strip (104), whereby each housing (4) has a mounting wall (45) and at least one receiving slot (21) in the mounting side (45), and whereby the mounting strip (104) has a number of connection bars (20) projecting from its inward bound surface (12) and oriented transversely with respect to the longitudinal direction of the mounting strip (104), whereby the receiving slot (21) and the connection bars (20) are forming the mutual connection devices, whereby the connection bar (20) has a T-shaped cross-section, with a first plate-like limb (40) arising from one of the two rectangular broad long-edged front plates (11), and with a second plate-like limb (41) formed at the free end of and perpendicular to the first limb (40).

## Patentansprüche

1. Verteilereinrichtung (101) für eine Elektroinstallation, umfassend einen Basisteil (102), versehen mit einem ersten Aufnahmemittel (103) zum Aufnehmen von ersten Ausrüstungselementen, versehen mit einem zweiten Aufnahmemittel (104) zum Aufnehmen von zweiten Ausrüstungselementen (105), wobei der Basisteil eine untere Oberfläche (106) und eine gegenüberliegende obere Oberfläche (107) hat, wobei der Basisteil zwei gegenüberliegende Seitenwände (108, 109) und eine obere Wand (110) und eine gegenüberliegende untere Wand (111) hat, wobei sich die Seitenwände (108, 109), die obere und die untere Wand (110, 111) rechtwinklig zu und in einer vorstehenden Beziehung von der oberen Oberfläche (107) erstrecken, wobei der Basisteil (102) mit seinem ersten und zweiten Aufnahmemittel (103, 104) und seinen Seitenwänden (108, 109) und seiner oberen und unteren Wand (110, 111) integral als ein Teil ausgebildet ist, wobei das erste Aufnahmemittel (103) eine Hutschiene ist,
**dadurch gekennzeichnet, dass** das zweite Aufnahmemittel (104) ein Montagestreifen zum Montieren eines Anschlussblocks ist, wobei der Montagestreifen eine nach innen gerichtete Oberfläche (112) und eine nach außen gerichtete Oberfläche (113) hat und wobei der Montagestreifen integral mit der oberen Wand (110) oder der unteren Wand (111) oder beiden ausgebildet ist.

2. Verteilereinrichtung (101) nach Anspruch 1, **dadurch gekennzeichnet, dass** der Basisteil (102) mit seinem ersten und zweiten Aufnahmemittel (103, 104) und seinen Seitenwänden (108, 109) und seiner oberen und unteren Wand (110, 111) integral durch Kunststoffspritzgießen ausgebildet wird.

3. Verteilereinrichtung (101) nach Anspruch 1, **dadurch gekennzeichnet, dass** die Hutschiene an ihren beiden Enden integral mit den Seitenwänden (108, 109) ausgebildet ist.

4. Verteilereinrichtung (101) nach Anspruch 3, **dadurch gekennzeichnet, dass** die Hutschiene integral an den Seitenwänden (108, 109) in einem Abstand von der oberen Oberfläche (107) ausgebildet ist, einen freien Raum zwischen der oberen Oberfläche (107) und der Hutschiene lassend.

5. Verteilereinrichtung (101) nach Anspruch 1, **dadurch gekennzeichnet, dass** die ersten Ausrüstungselemente Installationsschaltvorrichtungen sind.

6. Verteilereinrichtung (101) nach Anspruch 1, **dadurch gekennzeichnet, dass** der Montagestreifen vorstehende Leisten (114) zum Aufnehmen entsprechender Montageschlitze (115) auf der Montageseite (116) der Anschlussblöcke (105) hat, wobei die vorstehenden Leisten (114) quer bezüglich der Längsrichtung des Montagestreifens (104) ausgerichtet sind, parallel zueinander angeordnet sind und sich rechtwinklig zu und in einer vorstehenden Beziehung von der nach innen gerichteten Oberfläche (112) des Montagestreifens (104) erstrecken.

7. Verteilereinrichtung (101) nach Anspruch 1, **dadurch gekennzeichnet, dass** sie eine Anschlussblockanordnung (100) umfasst, die aus dem Montagestreifen (104) und Modulen (3) besteht, die am Montagestreifen (104) nebeneinander in einer Reihe angeordnet sind, wobei die Module (3) ein isoliertes Gehäuse (4) haben, wobei jedes Gehäuse (3) und der Montagestreifen (104) gegenseitige Verbindungsvorrichtungen (21, 20) zum Zwecke des Ansteckens der Module (3) am Montagestreifen (104) haben, quer bezüglich der Längsrichtung des Montagestreifens (104), wobei jedes Gehäuse (4) eine Montagewand (45) und zumindest einen Aufnahmeschlitz (21) in der Montageseite (45) hat und wobei der Montagestreifen (104) eine Anzahl von Verbindungsleisten (20) hat, die von seiner nach innen gerichteten Oberfläche (12) hervorstehen und quer bezüglich der Längsrichtung des Montagestreifens (104) ausgerichtet sind, wobei der Aufnahmeschlitz (21) und die Verbindungsleisten (20) die gegenseitigen Verbindungsvorrichtungen bilden, wobei die Verbindungsleiste (20) einen T-förmigen Querschnitt hat, mit einem ersten plattenartigen Schenkel (40), der sich aus einer der zwei rechteckigen, längs verlaufenden Frontplatten (11) erhebt, und mit einem zweiten plattenartigen Schenkel (41), der am freien Ende von und rechtwinklig zum ersten Schenkel (40) ausgebildet ist.

## Revendications

1. Unité (101) de distribution pour installation électrique, comportant une partie (102) de base munie d'un premier moyen (103) de réception destiné à recevoir des premiers éléments d'équipement, munie d'un deuxième moyen (104) de réception destiné à recevoir des deuxièmes éléments (105) d'équipement, ladite partie de base présentant une surface inférieure (106) et une surface supérieure (107) opposée, ladite partie de base présentant deux parois latérales (108, 109) opposées et une paroi (110) de sommet et une paroi (111) de fond opposée, lesdites parois latérales (108, 109), parois (110, 111) de sommet et de fond s'étendant perpendiculairement et en relation de saillie par rapport à ladite surface supérieure (107), la partie (102) de base dotée de ses premier et deuxième moyens (103, 104) de réception et de ses parois latérales (108, 109) et de ses parois (110, 111) de sommet et de fond étant formée de façon intégrée en une seule pièce, le premier moyen (103) de réception étant un rail oméga, **caractérisée en ce que** le deuxième moyen (104) de réception est un bandeau de montage destiné à monter un bornier, ledit bandeau de montage présentant une surface (112) dirigée vers l'intérieur et une surface (113) dirigée vers l'extérieur, et le bandeau de montage étant formé de façon intégrée avec la paroi (110) de sommet, la paroi (111) de fond ou les deux.

2. Unité (101) de distribution selon la revendication 1, **caractérisée en ce que** la partie (102) de base dotée de ses premier et deuxième moyens (103, 104) de réception et de ses parois latérales (108, 109) et de ses parois (110, 111) de sommet et de fond est formée de façon intégrée par moulage par injection de plastique.

3. Unité (101) de distribution selon la revendication 1, **caractérisée en ce que** le rail oméga est, à ses deux extrémités, formé de façon intégrée avec les parois latérales (108, 109).

4. Unité (101) de distribution selon la revendication 3, **caractérisée en ce que** le rail oméga est formé de façon intégrée aux parois latérales (108, 109) à une distance de la surface supérieure (107) laissant un espace libre entre la surface supérieure (107) et le rail oméga.

5. Unité (101) de distribution selon la revendication 1, **caractérisée en ce que** les premiers éléments d'équipement sont des dispositifs de commutation d'installation.

6. Unité (101) de distribution selon la revendication 1, **caractérisée en ce que** le bandeau de montage est doté de barres (114) en saillie destinées à recevoir des rainures (115) de montage respectives sur le côté (116) de montage des borniers (105), lesdites barres (114) en saillie étant orientées transversalement par rapport à la direction longitudinale du bandeau (104) de montage, disposées parallèlement les unes aux autres et s'étendant perpendiculairement et en relation de saillie par rapport à la surface (112) dirigée vers l'intérieur du bandeau (104) de montage.

7. Unité (101) de distribution selon la revendication 1, **caractérisée en ce qu'**elle comporte un agencement (100) de borniers, constitué du bandeau (104) de montage et de modules (3) qui peuvent être installés côte à côte en une rangée sur le bandeau (104) de montage, lesdits modules (3) possédant un boîtier isolé (4), chaque boîtier (3) et le bandeau (104) de montage étant dotés de dispositifs (21, 20) de liaison mutuelle dans le but d'enficher les modules (3) sur le bandeau (104) de montage, transversalement, par rapport à la direction longitudinale du bandeau (104) de montage, chaque boîtier (4) présentant une paroi (45) de montage et au moins une rainure (21) de réception dans la face (45) de montage, et le bandeau (104) de montage étant doté d'une multiplicité de barres (20) de liaison dépassant de sa surface (12) dirigée vers l'intérieur et orientées transversalement par rapport à la direction longitudinale du bandeau (104) de montage, la rainure (21) de réception et les barres (20) de liaison formant les dispositifs de liaison mutuelle, la barre (20) de liaison présentant une section droite en T, comprenant une première branche (40) semblable à une plaque s'élevant à partir d'une des deux plaques avant rectangulaires larges (11) à bords allongés, et une deuxième branche (41) semblable à une plaque formée à l'extrémité libre de la première branche (40) et perpendiculaire à celle-ci.
